# EUROPÄISCHE PATENTSCHRIFT

(11) **EP 0 689 907 B1**
(45) Veröffentlichungstag und Bekanntmachung des Hinweises auf die Patenterteilung: **12.08.1998**
(21) Anmeldenummer: 95107530.8
(22) Anmeldetag: 18.05.1995
(51) Int. Cl.: B27B 5/22, B23Q 1/26

(54) **Holzbearbeitungsmaschine**
Wood-working machine
Machine de travail du bois

(30) Priorität: 28.06.1994 DE 4422425
(43) Veröffentlichungstag der Anmeldung: 03.01.1996
(73) Patentinhaber: Otto Martin Maschinenbau GmbH & Co., 87720 Ottobeuren (DE)
(72) Erfinder: Martin, Otto, D-87724 Ottobeuren (DE); Martin, Max, D-87724 Ottobeuren (DE)
(74) Vertreter: Pfister, Helmut, Dipl.-Ing.

(56) Entgegenhaltungen:
- EP-A- 0 341 679
- DE-U- 9 307 673

## Beschreibung

Die Erfindung betrifft eine Holzbearbeitungsmaschine, insbesondere Formatkreissäge, mit einem an einem Gestell vorgesehenen Führungsbalken und einem auf diesem Führungsbalken bewegbaren Besäumtisch.

Holzbearbeitungsmaschinen z.B. Formatkreissägen besitzen einen als Wagen ausgebildeten Besäumtisch. Dieser Besäumtisch ist parallel zur Ebene des Sägeblatts verschiebbar und trägt das Werkstück. Als Werkstücke werden auf Formatkreissägen z.B. große, flächige Platten und dergleichen bearbeitet. Der Besäumtisch dient dazu, einen geraden Längsschnitt am Werkstück anzubringen um das Werkstück zu besäumen. Entsprechend der Größe der zu bearbeitenden Platten weist der Besäumtisch eine Länge von bis über 3,30 Meter auf. Der Besäumtisch ist auf einem Führungsbalken vorgesehen. Der Führungsbalken unterstützt den Besäumtisch. Für eine Lagerung des Besäumtisches auf den Führungsbalken sind im allgemeinen Führungsrollen oder Kugelführungen vorgesehen, die eine Leichtgängigkeit des Besäumtisches auf dem Führungsbalken sicherstellen. Der Führungsbalken besitzt in der Regel die gleiche Länge wie der Besäumtisch, wodurch eine optimale Abstützung und Führung des Besäumtisches sichergestellt ist. Beim Verschieben des Besäumtisches ragt der Besäumtisch nach der einen oder anderen Seite über den Führungsbalken vor und es ist klar, daß hierdurch die Abstützweite zwischen dem Führungsbalken und dem Besäumtisch verringert wird. Die Abstützung des Besäumtisches ist somit nur in einer Mittellage optimal. Die Abstützweite ist in anderen Betriebsstellungen immer geringer.

Bei Holzbearbeitungsmaschinen der in Rede stehenden Art ergeben sich zwei Arbeitsplätze, und zwar jeweils auf der linken und auf der rechten Seite des Sägeblatts. Beim Arbeitsplatz rechts vom Sägeblatt wird das Werkstück in der Regel zwischen dem Parallelanschlag und dem Sägeblatt hindurch auf den Tisch geschoben und so auf die genaue Breite geschnitten.

Bei Arbeitsplatz links vom Sägeblatt wird das Werkstück auf dem Besäumtisch und je nach Werkstückgröße auch auf den daran angehängten Quertisch aufgelegt und mit diesen Auflageelementen am Sägeblatt vorbeibewegt. Das Werkstück wird auf diese Weise auf einer Seite beschnitten (besäumt). Für diese Anwendung eignen sich insbesondere Formatsägemaschinen.

Da nun der Führungsbalken mit seinem einen Ende in der Regel über das Maschinengestell vorsteht, trennt der Führungsbalken die beiden Arbeitsplätze voneinander. Bei Arbeiten, bei denen einmal der eine Arbeitsplatz und einmal der andere Arbeitsplatz benützt wird, ist dies von Nachteil.

Die Erfindung hat es sich zur Aufgabe gemacht, eine Anordnung bei derartigen Maschinen zu finden, die mit einem kürzeren Führungsbalken auskommt. Durch eine solche Ausgestaltung wird die Bedienungsfreundlichkeit solcher gattungsgemäßen Maschinen erhöht.

Zur Lösung der Aufgabe geht die Erfindung aus von einer Holzbearbeitungsmaschine, wie oben beschrieben und schlägt vor, daß für die Abstützung des Besäumtisches auf dem Führungsbalken mindestens zwei Rollwagen vorgesehen sind und der Abstand der Rollwagen veränderbar ist.

Bei den bisherigen Bauweisen mit Führungsbalken in der Länge des Besäumtisches wird die volle Länge des Führungsbalkens nur in einer einzigen Betriebsstellung ausgenutzt, nämlich dann, wenn die jeweiligen Enden des Führungsbalkens und des Besäumtisches aneinander zugeordnet sind. In allen übrigen Betriebsstellungen ist der Besäumtisch gegenüber dem Führungsbalken verschoben. Die Länge der gegenseitigen Abstützung reduziert sich hierdurch. Die gute Führungseigenschaft des langen Führungsbalkens ist somit nur wenig ausnutzbar. Hinzu kommt, daß bei der Bewegung des Besäumtisches gegenüber dem Führungsbalken immer andere Teile der Führungen zusammenwirken. Dies wirkt sich auf die Exaktkeit der Bewegungen des Besäumtisches aus, und zwar in dem Sinne, daß sich die verschiedenen Ungenauigkeiten der Führungen addieren.

Bei der erfindungsgemäß vorgeschlagenen Holzbearbeitungsmaschine ist nicht nur der Führungsbalken viel kürzer als beim Stande der Technik. Da sich die Rollwagen im Gegensatz zu den herkömmlichen Führungen bei einem wesentlichen Teil der Bewegungen des Besäumtisches nicht mitbewegen, wird der Besäumtisch bei der Erfindung bei diesem Teil der Bewegungen des Besäumtisches immer an den gleichen Stellen des Führungsbalkens unterstützt. Ungenauigkeiten des Führungsbalkens wirken sich daher insoweit nicht auf die Exaktheit der Bewegungen des Besäumtisches aus.

Die Länge des Führungsbalkens kann z.B. auf die Hälfte der Länge des Besäumtisches reduziert werden. Trotzdem erreicht die Erfindung eine einwandfreie Führung des Besäumtisches, und zwar bei einem Großteil aller Bearbeitungsvorgänge, da sich die Rollwagen fast immer an der gleichen Stelle des Führungsbalkens befinden. Wird nun der Besäumtisch in eine Extremlage bewegt, wird z.B. eine sehr große Platte besäumt, so sind am Besäumtisch Mittel vorgesehen, die die Rollwagen mitnehmen und erst dann in den extremen Situationen eine Reduzierung der wirksamen Abstützlänge des Besäumtisches auf dem Führungsbalken bewirkt. Die hohe Genauigkeit der Führung des Besäumtisches auf dem Führungsbalken wird durch eine entsprechend hohe Genauigkeit der Rollwagen auf dem Führungsbalken sichergestellt.

In einer bevorzugten Ausführung der Erfindung ist vorgeschlagen, daß die Rollwagen je am Ende des Führungsbalkens den Besäumtisch abstützen. Somit wird die ganze Länge des jetzt verkürzten Führungsbalkens als Abstand der Auflagepunkte des Besäumtisches verwendet. Hieraus resultiert eine sichere Halterung und Führung des Besäumtisches auf dem Führungsbalken.

Es ist günstig, wenn das Ende des Besäumtisches einen Mitnehmer aufweist, der einen der Rollwagen auf dem Führungsbalken bei der Bewegung des Besäumtisches mitnimmt. Wenn der Besäumtisch in einer extremen Bearbeitungssituation, z.B. bei dem Bearbeiten von großen Platten, über das Ende des Führungsbalkens rollt, wird erst dann die wirksame Abstützlänge auf dem Führungsbalken verringert. Zu diesem Zeitpunkt wirkt der an dem Ende des Besäumtisches vorgesehene Mitnehmer mit dem entsprechenden Rollwagen zusammen.

Ferner wird vorgeschlagen, daß eine Vorrichtung vorgesehen ist, durch die der Rollwagen an dem Ende des Führungsbalkens gehalten ist. Durch diese Vorrichtung ist sichergestellt, daß, soweit möglich, immer die maximale Länge des Führungsbalkens auch als maximale wirksame Abstützlänge des Besäumtisches auf dem Führungsbalken zur Verfügung steht.

Es ist günstig, wenn die Vorrichtung zwischen den Rollwagen wirkt. Wenn nun z.B. vorteilhafterweise eine Druckfeder als Vorrichtung vorgesehen ist, die beispielsweise zwischen den beiden Rollwagen wirkt, so wird mit einem Bauelement die beiden Rollwagen jeweils an dem Ende des Führungsbalkens gehalten. Es ist von Vorteil, wenn als Vorrichtung hierzu beispielsweise eine Druckfeder oder eine Gasfeder vorgesehen ist. Diese Vorrichtung ist z.B. zwischen den beiden Rollwagen vorgesehen, es kann aber für jeden Rollwagen eine besondere Vorrichtung vorgesehen sein, die bewirkt, daß der Rollwagen an dem Ende des Führungsbalken gehalten ist.

Es können auch andere Mittel vorgesehen werden, um die Rollwagen in der Endposition zu halten. Beispielsweise können Magnete oder ähnliche Elemente vorgesehen werden, die die Rollwagen am Ende des Führungsbalkens festhalten, es aber zulassen, daß die Enden des Besäumtisches die Rollwagen gegebenenfalls mitnehmen, wobei wiederum gleiche oder ähnliche Mittel eine gegenseitige Zuordnung der Rollwagen mit den Enden des Besäumtisches sicherstellen.

Nach einem besonderen Vorschlag der Erfindung ist vorgesehen, daß der Rollwagen zwei Doppelrollen aufweist, wobei die erste Rolle jeder Doppelrolle mit dem Besäumtisch und die zweite Rolle jeder Doppelrolle mit dem Führungsbalken zusammenwirkt.

Dabei sind Führungselemente am Besäumtisch und am Führungsbalken für die Rollen vorgesehen, wobei die beiden Doppelrollen in Bewegungsrichtung des Rollwagens gegeneinander versetzt sind. Insbesondere ist eine verstellbare Spannrolle vorgesehen, die sich an einem Führungselement abstützt, um den Abstand der Doppelrollen rechtwinklig zu den Führungselementen einzustellen. Mittels einer derartigen Anordnung ist es möglich, die spielfreie Lagerung und Führung des Besäumtisches auf dem Führungsbalken sicherzustellen.

Ferner ist vorgesehen, daß an den Rollwagen zwischen den Doppelrollen und der Spannrolle ein Spannelement vorgesehen ist. Dieses Spannelement kann beispielsweise eine Spannschraube sein, durch die erreicht werden kann, daß die Doppelrollen spielfrei an den Führungen anliegen.

Es ist günstig, wenn der Rollwagen in der Ebene der beiden Schienen des Führungsbalkens verformbar ist. Z.B. sind in dem Rollwagen Schlitze vorgesehen, durch die eine geeigente, ausreichende Verformbarkeit der Rollwagen herbeigeführt wird.

Ferner wird vorgeschlagen, daß die Rolle prismatisch eingeschliffen ist. Durch eine solche Ausgestaltung der Rolle wird eine sichere, spielfreie Lagerung der Rolle auf den Führungselementen erreicht.

In einer bevorzugten Ausführung ist vorgesehen, daß an dem Führungsbalken Anschläge bzw. Sicherungsriegel für den Rollwagen vorgesehen sind. Die Anschläge bewirken, daß bei einem Verschieben des Besäumtisches über den Führungsbalken eine Mindestlänge zwischen den beiden Rollwagen existiert, um eine sichere Lagerung des Besäumtisches auf dem Führungsbalken zu gewährleisten. Auch können Sicherungsvorrichtungen, wie z.B Sicherungsriegel vorgesehen sein, um das Vorbeifahren des Besäumtisches am Sägeblatt, um dieses wechseln zu können, erst nach manuellem Lösen dieser Sicherung zu ermöglichen. Dies kann einfach durch Anbringen eines Sicherungsriegels am Führungsbalken an einer entsprechenden Stelle bewirkt werden, die den Bewegungsweg für einen der Rollwagen sperrt bzw. freigibt. Diese Sicherungsvorrichtung kann auch durch einen elektrischen Kontakt überwacht werden und bei einer unsachgemäßen Manipulierung z.B. die Stromzuführung für die Kreissäge unterbrechen.

Nach einem weiteren Merkmal der Erfindung ist vorgesehen, daß der Rollwagen Stütz- und Führungsrollen aufweist, deren Achsen im wesentlichen horizontal ausgerichtet sind. Insbesondere wird vorgeschlagen, daß eine gemeinsame horizontale Achse für die Stütz- und Führungsrollen gegeben ist.

Zur Einstellung des Spiels empfiehlt es sich, eine einstellbare Exzenterlagerung für eine Gegenrolle zu einer Führungsrolle vorzusehen.

Eine Variante der erfindungsgemäßen Anordnung ist gekennzeichnet durch eine, gegen eine Federkraft axial verschiebbare, eine konische Lauffläche aufweisende Gegenrolle zu einer Führungsrolle.

In der Zeichnung ist eine erfindungsgemäße Holzbearbeitungsmaschine schematisch dargestellt. Es zeigen:
- Fig. 1: eine erfindungsgemäße Holzbearbeitungsmaschine in Seitenansicht in einer ersten Stellung,
- Fig. 2: eine Ansicht nach Fig. 1, wobei der Besäumtisch in eine zweite Stellung nach links verschoben ist,
- Fig. 3: eine Draufsicht auf eine erfindungsgemäße Holzbearbeitungsmaschine, wobei für eine bessere Übersichtlichkeit der Besäumtisch abgenommen ist,
- Fig. 4: ein lotrechter Schnitt nach der Linie IV-IV in Fig. 3,
- Fig. 5: eine Draufsicht einer weiteren Ausgestaltungsform einer erfindungsgemäßen Holzbearbeitungsmaschine, wobei der Besäumtisch abgenommen ist,
- Fig. 6: ein lotrechter Schnitt gemäß der Linie VI-VI in Fig. 5,
- Fig. 7: eine Frontansicht einer erfindungsgemäßen Schneidemaschine gemäß dem Pfeil VII in Fig. 1,
- Fig. 8: eine Draufsicht auf ein abgewandeltes Ausführungsbeispiel der Erfindung,
- Fig. 9: eine vergrößerte Schnittdarstellung des Ausführungsbeispiels nach der Fig. 8, und
- Fig. 10: eine vergrößerte Schnittdarstellung eines abgewandelten Ausführungsbeispiels.

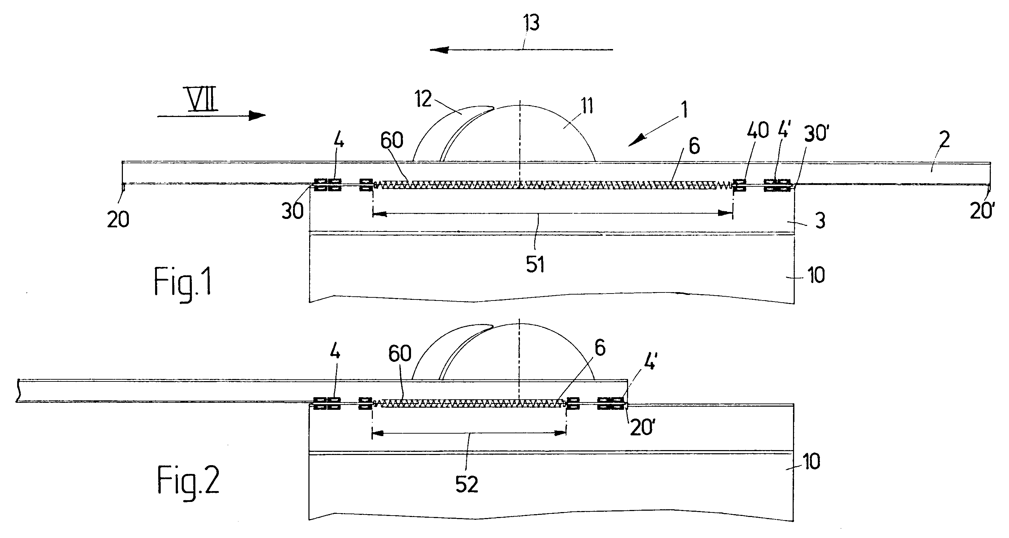

In Fig. 1 ist eine erfindungsgemäße Holzbearbeitungsmaschine 1 gezeigt. Die Holzbearbeitungsmaschine 1 besteht hierbei aus einem Gestell 10, das sich auf dem Boden abstützt, einem an dem Gestell 10 vorgesehenen Führungsbalken 3 und einem auf dem Führungsbalken 3 aufliegendem Besäumtisch 2. Die Holzbearbeitungsmaschine 1 trägt hier ein Sägeblatt 11, dessen Schneidebene im wesentlichen senkrecht angeordnet ist. Die Rotationsachse 14 des Sägeblattes 11 ist somit im wesentlichen waagrecht. Mit 13 ist die Bewegungsrichtung des Besäumtisches während der Bearbeitung eines nicht gezeigten Holzwerkstückes gezeigt. Hierbei wird der Besäumtisch aus der Lage in Fig. 1 längs des Pfeiles 13 in die Stellung gemäß Fig. 2 bewegt. In Bewegungsrichtung 13 hinter dem Sägeblatt 11 ist ein Spaltkeil 12 vorgesehen, wie dies ansich bekannt ist.

Der Besäumtisch 2 ist durch den Rollwagen 4 bzw. 4' auf dem Führungsbalken 3 gelagert. Der Abstand der beiden Rollwagen 4 bzw. 4' ist in Fig. 1 mit dem Doppelpfeil 51 gekennzeichnet. In Fig. 2 ist der verkürzte Abstand zwischen den beiden Rollwagen in bezug auf Fig. 1 mit dem Doppelpfeil 52 bezeichnet.

Zwischen den beiden Rollwagen 4 bzw. 4' ist z.B. eine Druckfeder 60 vorgesehen. Diese Druckfeder 60 bewirkt, daß die Rollwagen 4 bzw. 4' bevorzugt an den Enden 30 bzw. 30' des Führungsbalken 3 gehalten sind. Allgemein ist hierzu ein kraftbildendes Element, die Vorrichtung 6 vorgesehen, das z.B. als Druckfeder 60 ausgestaltet ist. Hierzu können auch andere Mittel vorgesehen werden. Z.B. ist es möglich, daß die Vorrichtung 6 durch Magnete gebildet ist. Es ist also nicht notwendig, daß das kraftbildende Element 6 sich zwischen den beiden Rollwagen 4 bzw. 4' befindet und zwischen diesen beiden wirkt, sondern das kraftbildende Element kann auch beispielsweise zwischen dem Gestell 10 bzw. dem Führungsbalken 3 und dem Rollwagen 4 bzw. 4' wirken.

Als weitere Vorrichtung 6 ist z.B. eine Gasdruckfeder vorgesehen.

Der Besäumtisch 2 weist an seinen Enden Mitnehmer 20 bzw. 20' auf. Diese Mitnehmer wirken mit den Rollwagen 4 bzw. 4' zusammen. Wird der Besäumtisch 2 z.B. längs des Pfeiles 13 bewegt, derart, daß der Mitnehmer 20' von rechts nach links über das Ende 30' des Führungsbalkens 3 bewegt wird, so kommt der Mitnehmer 20' in Eingriff mit dem Rollwagen 4'. Dies ist in den Fig. 1 und 2 dargestellt.

Wird nun der Besäumtisch 2 weiterhin nach links, also gemäß der Bewegungsrichtung 13 weiterbewegt, so bewegt sich das Ende des Besäumtisches bzw. der Mitnehmer 20' über das Ende 30' des Führungsbalkens 3 hinweg nach links. Bei dieser Weiterführung des Besäumtisches 2 nimmt nun der Mitnehmer 20' den Rollwagen 4' mit und verkürzt somit die wirksame Abstützweite zwischen den beiden Rollwagen 4 bzw. 4'. Der verkürzte Abstand zwischen den beiden Rollwagen ist in Fig. 2 mit Pfeil 52 gekennzeichnet.

Das gleiche gilt, wenn der Besäumtisch entgegen der Richtung des Pfeiles 13 nach rechts verschoben wird, wo dann der Mitnehmer 20 in Eingriff mit dem Rollwagen 4 kommt. Es ist zu beachten, daß der Rollwagen, der gerade nicht mit einem Mitnehmer 20 bzw. 20' zusammenwirkt, durch die Vorrichtung 6 am Ende 30 bzw. 30' des Führungsbalkens 3 gehalten ist.

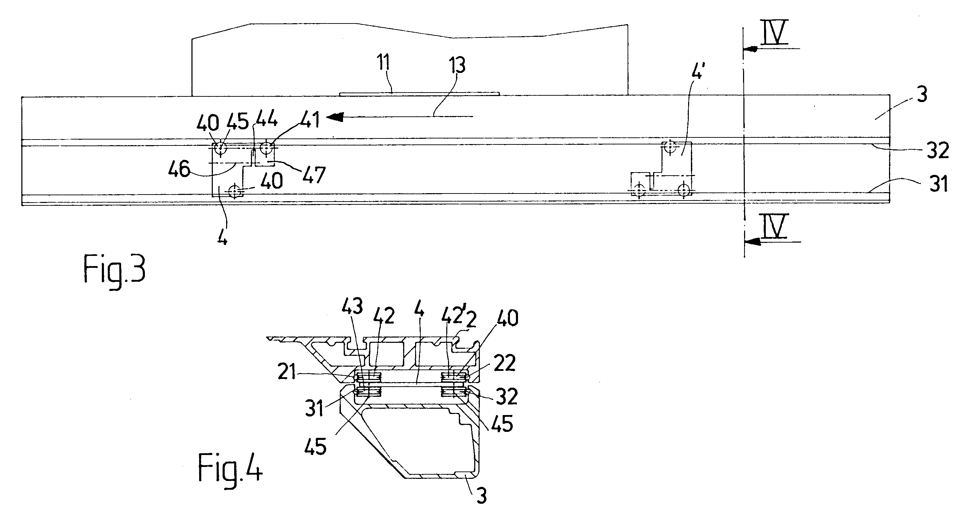

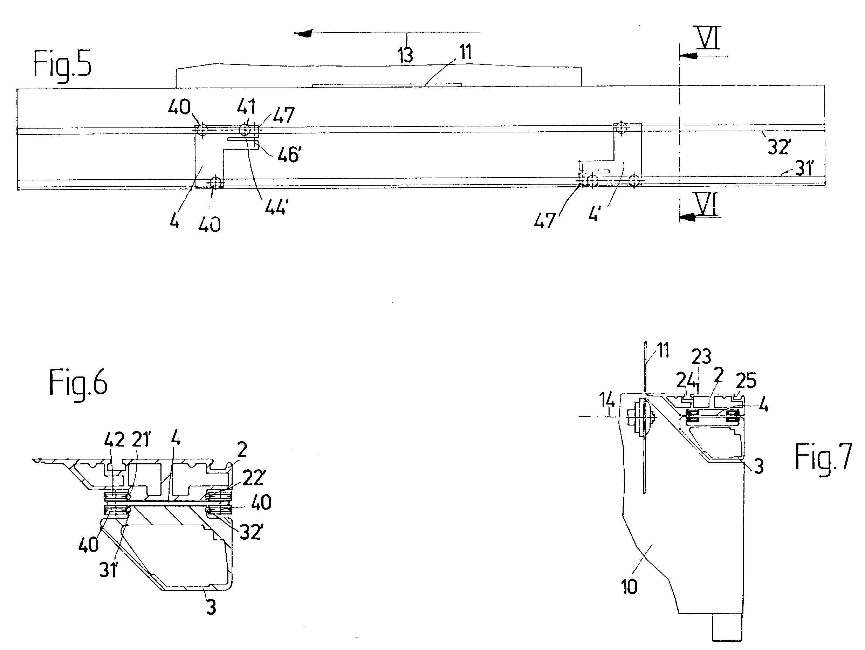

In den Fig. 3,4 bzw. 5,6 sind zwei Ausführungsbeispiele der Erfindung gezeigt. In den Fig. 3 und Fig. 5 sind für eine bessere Übersichtlichkeit jeweils der Besäumtisch abgenommen, und die Rollwagen befinden sich nicht am Ende des Führungsbalkens. In Fig. 4 ist in einem lotrechten Schnitt gezeigt, wie der Besäumtisch 2 mit Hilfe des Rollwagens 4 auf den Führungsbalken 3 geführt und gelagert ist. Hierzu weist der Rollwagen 4 zwei Doppelrollen 40 auf. Die Achsen 45 dieser Rollen 40 sind senkrecht angeordnet. Hierbei wirkt die obere Rolle 42 bzw. 42' mit einem Führungselement 21,22 des Besäumtisches 2 zusammen, und eine weitere Rolle 43 bzw. 43' auf der gleichen Achse 45 jeder Doppelrolle 40 wirkt mit Führungselementen 31,32 des Führungsbalkens 3 zusammen. Hierbei ist zu beachten, daß die beiden Rollen 42,43 nicht miteinander gekoppelt sind, also sich auf der Achse 45 unabhängig voneinander drehen können. Die Rollen 42 und 42' bzw. 43 und 43' weisen prismatische Einschnitte auf ihren Laufflächen auf, um eine sichere Führung des Rollwagens 4 auf den Führungselementen 21,31 bzw. 22,32 zu gewährleisten.

In Fig. 4 ist gezeigt, daß die Führungselemente 21,22,31,32 von der Außenseite her mit dem Rollwagen 4 zusammenwirken. Dies bedeutet, daß z.B. zwischen den Führungselementen 21,22 die beiden Rollen 42 und 42' vorgesehen sind und zwischen den Führungselementen 31 und 32 die Rollen 43 und 43'.

Hingegen ist in Fig. 6 gezeigt, daß auch eine andere Anordnung der Führungselemente 21',22',31',32' im Zusammenhang mit den Doppelrollen 40 möglich ist. Hier ist vorgesehen, daß die Führungselemente 21',22',31' und 32' zwischen den Doppelrollen 40 wirken. Die Führungselemente 21' und 22' des Besäumtisches befinden sich somit zwischen den zugehörigen Rollen 42 und 42', während die Führungselemente 31' und 32' des Führungsbalkens sich zwischen den entsprechenden Rollen der Doppelrollen 40 befinden.

Für eine sichere und exakte Führung des Besäumtisches 2 auf dem Rollwagen 4 und des Rollwagens 4 auf dem Führungsbalken 3 ist ferner eine Einstellvorrichtung vorgesehen, die im wesentlichen aus dem Spannelement 46 und der Spannrolle 41 besteht.

Wie sich beispielsweise aus der Darstellung mit der Fig. 3 ergibt, ist jeder der Rollwagen 4 bzw. 4' mit zwei Doppelrollen 40 versehen. Diese Doppelrollen sind in der Bewegungsrichtung des Pfeiles 13 gegeneinander versetzt. Die Rollwagen 4 bzw. 4' sind in gewisser Weise verformbar, was durch einen Spalt 44 erreicht wird, der einen Ansatz trägt, in dem die Spannrolle 41 gelagert ist. Am Spalt 44 ist ein Spannelement 46 vorgesehen, mit dem es möglich ist, den Ansatz 47, der die Rolle 41 trägt, gegenüber den übrigen Teilen des Rollwagens 4 zu verformen. Die Spannrolle 41 kann dabei an der Führung 32 oder auch an der Führung 22 anliegen.

Wenn nun das Spannelement 46 so betätigt wird, daß sich der Spalt 44 vergrößert, werden die Doppelrollen 40 gegen die zugehörigen Führungen gedrückt, wodurch sich das Spiel verringert. Der Rollwagen 4' besitzt eine gleichartige Ausbildung.

Bei der Variante, die in der Fig. 5 gezeigt ist, wird der Ansatz 47 mit der Spannrolle 41 beim Spannvorgang mittels des Spannelementes 46' gegen die entsprechenden Führungselemente des Besäumtisches bzw. des Führungsbalkens gedrückt, wodurch sich der Abstand der Doppelrollen 40 verringert und hierdurch das Spiel beseitigt wird.

Die Führungselemente 21,22,31 und 32 sind vorzugsweise als Führungsschienen ausgebildet, die einen im wesentlichen kreisrunden Querschnitt aufweisen. Die prismatisch ausgeführten Laufflächen der Doppelrollen 40 wirken mit diesen Führungselementen zusammen.

In Fig. 7 ist eine Frontansicht einer erfindungsgemäßen Holzbearbeitungsmaschine gezeigt. Hierbei ist der Führungsbalken 3 auf dem Gestell 10 gelagert. Der Besäumtisch 2 ist mit Hilfe der Rollwagen 4 auf dem Führungsbalken 3 geführt. Die Schneidfläche ist entsprechend der Stellung des Sägeblattes 11 hier senkrecht. Die Auflagefläche 23 des Besäumtisches 2 weist mehrere Führungsnuten 24,25 auf, in die z.B. bei großen Werkstücken ein Quertisch eingehängt werden kann. Der Besäumtisch ist in einer Ebene parallel zur Schneidebene des Sägeblattes 11 verschiebbar.

Um einen minimalen Abstand 51,52 zwischen den Rollwagen zu gewährleisten, ist vorgesehen, daß auf dem Weg der Rollwagen 4 Klappen und Anschläge vorgesehen sind, die ein Weiterbewegen des Rollwagens verhindern. Diese Mindestabstände sind für eine sichere Führung des Besäumtisches 2 auf dem Führungsbalken 3 zu beachten.

Ebenso kann für das Wechseln des Sägeblattes 11 eine Sicherungsvorrichtung vorgesehen sein, die mit der Bewegung der Rollwagen 4 zusammenwirkt. Es kann z.B. vorgesehen sein, daß der Besäumtisch nur bei Stillstand der Maschine soweit vorbewegt werden kann, daß die Achse 14 des Sägeblattes 11 zugänglich ist, um das Sägeblatt 11 aus der Holzbearbeitungsmaschine 1 auszubauen.

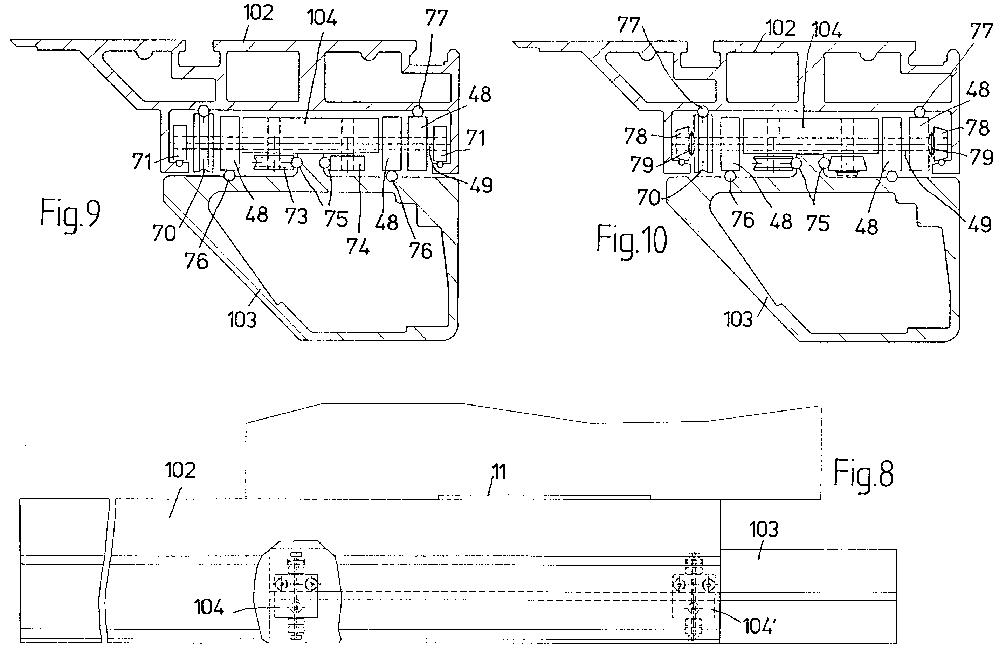

In den Fig. 8 und 9 ist ein abgewandeltes Ausführungsbeispiel der Erfindung dargestellt. Die Rollwagen 104 bzw. 104' dieses Ausführungsbeispieles besitzen Stützrollen 48, die auf einer gemeinsamen Achse 49 gelagert sind. Diese Achse 49 trägt auch die Führungsrolle 70 sowie die Gegenrollen 71. Um den Spielausgleich zu erzielen, besitzen die Gegenrollen 71 eine exzentrische Lagerbüchse, mit der sie sich auf der nicht mitdrehenden Achse 49 abstützen.

Die Anordnung gemäß Fig. 8 bis 9 hat den Vorteil, daß die Stütz- und Führungsrollen jeweils radial beansprucht werden, was zu einer steiferen Bauweise führt Um ein Abheben des Besäumtisches 102 vom Führungsbalken 103 auszuschließen, sind ferner noch Führungsrollen 73 und eine Abstützrolle 74 vorgesehen, die jeweils eine senkrechte Drehachse aufweisen und mit Führungselementen 75 am Führungsbalken 3 zusammenwirken. Die Führungselemente für die Abstütz- und Führungsrollen 48 bzw. 70 sind mit 76 und 77 bezeichnet.

Die Fig. 10 zeigt eine Variante zum Ausführungsbeispiel nach den Fig. 8 und 9. Bei diesem Ausführungsbeispiel sind die Gegenrollen 78 auf der Achse 49 mit einer konischen Lauffläche versehen. Sie stützen sich über ein Federelement 79 axial ab, z.B. an einem nicht näher dargestellten Bund der Achse 49 oder auch an der benachbarten Rolle. Auf diese Weise kann ein automatischer Spielausgleich erreicht werden.

Die in den abhängigen Ansprüchen angeführten Rückbeziehungen weisen auf die weitere Ausbildung des Gegenstandes des Hauptanspruches durch die Merkmale des jeweiligen Unteranspruches hin.

## Patentansprüche

1. Holzbearbeitungsmaschine, insbesondere Formatkreissäge mit einem an einem Gestell vorgesehenen Führungsbalken und einem auf diesem Führungsbalken bewegbaren Besäumtisch, **dadurch gekennzeichnet, daß** für die Abstützung des Besäumtisches (2) auf dem Führungsbalken (3) mindestens zwei Rollwagen (4,4') vorgesehen sind und der Abstand (51,52) der Rollwagen veränderbar ist.

2. Holzbearbeitungsmaschine nach Anspruch 1, **dadurch gekennzeichnet, daß** die Rollwagen (4,4') je am Ende (30,30') des Führungsbalkens (3) den Besäumtisch (2) abstützen.

3. Holzbearbeitungsmaschine, nach einem oder mehreren der vorhergehenden Ansprüche, **dadurch gekennzeichnet, daß** das Ende des Besäumtisches (2) einen Mitnehmer (20,20') aufweist, der einen der Rollwagen (4,4') auf dem Führungsbalken (3) dann mitnimmt, wenn sich bei der Bewegung (13) des Besäumtisches (2) die maximale Abstützweite verringert.

4. Holzbearbeitungsmaschine, nach einem oder mehreren der vorhergehenden Ansprüche, **gekennzeichnet durch** eine Vorrichtung (6) durch die der Rollwagen (4,4') an dem Ende (30, 30') des Führungsbalkens (3) gehalten ist.

5. Holzbearbeitungsmaschine, nach einem oder mehreren der vorhergehenden Ansprüche, **dadurch gekennzeichnet, daß** die Vorrichtung (6) zwischen den Rollwagen (4,4') wirkt.

6. Holzbearbeitungsmaschine, nach einem oder mehreren der vorhergehenden Ansprüche, **dadurch gekennzeichnet, daß** die Vorrichtung (6) von einer Druckfeder (60) gebildet ist.

7. Holzbearbeitungsmaschine, nach einem oder mehreren der vorhergehenden Ansprüche, **dadurch gekennzeichnet, daß** die Vorrichtung (6) von einer Gasfeder gebildet ist.

8. Holzbearbeitungsmaschine, nach einem oder mehreren der vorhergehenden Ansprüche, **dadurch gekennzeichnet, daß** der Rollwagen (4) zwei Doppelrollen (40) aufweist, wobei die erste Rolle (42) jeder Doppelrolle (40) mit dem Besäumtisch (2), und die zweite Rolle (43) jeder Doppelrolle (40) mit dem Führungsbalken (3) zusammenwirkt, mit Führungselementen (21,22,31,32) am Besäumtisch (2) und am Führungsbalken (3) für die Rollen, daß die beiden Doppelrollen (40) in Bewegungsrichtung des Rollwagens (4,4') gegeneinander versetzt sind und daß eine verstellbare Spannrolle (41) vorgesehen ist, die sich an einem der Führungselemente (31,32) abstützt, um den Abstand der Doppelrollen rechtwinklig zu den Führungselementen einzustellen.

9. Holzbearbeitungsmaschine, nach einem oder mehreren der vorhergehenden Ansprüche, **dadurch gekennzeichnet, daß** an den Rollwagen (4,4') zwischen den Doppelrollen (40) und der Spannrolle (41) ein Spannelement (46) vorgesehen ist.

10. Holzbearbeitungsmaschine, nach einem oder mehreren der vorhergehenden Ansprüche, **dadurch gekennzeichnet, daß** der Rollwagen (4,4') in der Ebene der Führungselemente (31,32) des Führungsbalkens (3) verformbar ist.

11. Holzbearbeitungsmaschine, nach einem oder mehreren der vorhergehenden Ansprüche, **dadurch gekennzeichnet, daß** die Rollen (42,43) prismatisch eingeschliffen sind.

12. Holzbearbeitungsmaschine, nach einem oder mehreren der vorhergehenden Ansprüche, **dadurch gekennzeichnet, daß** an dem Führungsbalken (3) Anschläge bzw. Sicherungsriegel für den Rollwagen (4,4') vorgesehen sind.

13. Holzbearbeitungsmaschine, nach einem oder mehreren der vorhergehenden Ansprüche, **dadurch gekennzeichnet, daß** der Rollwagen (104,104') Stütz- und Führungsrollen (48,70) aufweist, deren Achsen im wesentlichen horizontal ausgerichtet sind.

14. Holzbearbeitungsmaschine, nach Anspruch 13, **gekennzeichnet durch** eine gemeinsame horizontale Achse (49) der Stütz- und Führungsrollen (48,70).

15. Holzbearbeitungsmaschine, nach einem oder mehreren der vorhergehenden Ansprüche, **gekennzeichnet durch** eine einstellbare Exzenterlagerung für eine Gegenrolle (71) zu einer Führungsrolle (70).

16. Holzbearbeitungsmaschine, nach einem oder mehreren der vorhergehenden Ansprüche, **gekennzeichnet durch** eine gegen eine Federkraft axial verschiebbare, eine konische Lauffläche aufweisende Gegenrolle (78) zu einer Führungsrolle (70).

## Claims

1. A wood working machine, in particular a circular saw for final trimming, with a guide beam arranged on a frame and a trimming table movable on said guide beam, **characterized in that** at least two roller carriages (4, 4') are provided on the guide beam (3) for supporting the trimming table (2) and the distance (51, 52) between the roller carriages is capable of being modified.

2. A wood working machine according to claim 1, **characterized in that** the roller carriages (4, 4') each support the trimming table (2) at one end (30, 30') of the guide beam (3).

3. A wood working machine according to one or more of the preceding claims, **characterized in that** the end of the trimming table (2) has a catch device (20, 20') to drive one of the roller carriages (4, 4') on the guide beam (3) when the movement (13) of the trimming table (2) effects a reduction in the maximum supporting width.

4. A wood working machine according to one or more of the preceding claims, **characterized** by a device (6) holding the roller carriage (4, 4') at the end (30, 30') of the guide beam (3).

5. A wood working machine according to one or more of the preceding claims, **characterized in that** the device (6) acts between the roller carriages (4, 4').

6. A wood working machine according to one or more of the preceding claims, **characterized in that** the device (6) is formed by a compression spring (60).

7. A wood working machine according to one or more of the preceding claims, **characterized in that** the device (6) is formed by a pneumatic spring.

8. A wood working machine according to one or more of the preceding claims, **characterized in that** the roller carriage (4) has two double rollers (40), the first roller (42) of each double roller (40) co-operating with the trimming table (2) and the second roller (43) of each double roller (40) co-operating with the guide beam (3), with guiding elements (21, 22, 31, 32) provided on the trimming table (2) and on the guide beam (3) for the rollers, that the two double rollers (40) are offset with respect to each other in the direction of movement of the roller carriage (4, 4') and that an adjustable tension roller (41) is provided supported on one of the guiding elements (31, 32) in order to adjust the distance of the double rollers at right angles to the guiding elements.

9. A wood working machine according to one or more of the preceding claims, **characterized in that** a tension element (46) is provided on the roller carriages (4, 4') between the double rollers (40) and the tension roller.

10. A wood working machine according to one or more of the preceding claims, **characterized in that** the roller carriage (4, 4') is capable of being deformed in the plane of the guiding elements (31, 32) of the guide beams (3).

11. A wood working machine according to one or more of the preceding claims, **characterized in that** the rollers (42, 43) are cut to have a prismatic shape.

12. A wood working machine according to one or more of the preceding claims, **characterized in that** stops or retaining hooks for the roller carriage (4, 4') are arranged on the guide beam (3).

13. A wood working machine according to one or more of the preceding claims, **characterized in that** the roller carriage (104, 104') has supporting and guiding rollers (48, 70) with axes essentially in a horizontal position.

14. A wood working machine according to claim 13, **characterized by** the supporting and guiding rollers (48, 70) having a common horizontal axis (49).

15. A wood working machine according to one or more of the preceding claims, **characterized** by an adjustable eccentric bearing for a counter-roller (71) acting together with a guiding roller (70).

16. A wood working machine according to one or more of the preceding claims, **characterized by** a counter-roller (78) acting together with a guiding roller (70), said counter-acting roller being axially movable against an elastic force and having a cone shaped running surface.

## Revendications

1. Machine d'usinage de bois pouvant être en particulier une scie circulaire d'équarrissage ayant une poutre de guidage fixée à un cadre, une table d'équarrissage mobile sur cette poutre de guidage, caractérisée en ce qu'au moins deux chariots roulants (4, 4') permettent l'appui de la table d'équarrissage (2) sur la poutre de guidage (3), la distance (51, 52) entre les chariots roulants étant variable.

2. Machine d'usinage de bois selon la revendication 1, caractérisée en ce que les chariots roulants (4, 4') supportent la table d'équarrissage (2) à chaque bout (30, 30') de la poutre de guidage.

3. Machine d'usinage de bois selon l'une ou plusieurs des revendications précédentes, caractérisée en ce que le bout de la table d'équarrissage (2) possède un entraîneur (20, 20') qui entraîne un des chariots roulants (4, 4') sur la poutre de guidage (3), si la longueur d'appui maximale est diminuée par le mouvement (13).

4. Machine d'usinage de bois selon l'une ou plusieurs des revendications précédentes, caractérisée par un dispositif (6), fixant le chariot roulant (4, 4') au bout (30, 30') de la poutre de guidage (3).

5. Machine d'usinage de bois selon l'une ou plusieurs des revendications précédentes, caractérisée en ce que le dispositif (6) agit entre les chariots roulants (4, 4').

6. Machine d'usinage de bois selon l'une ou plusieurs des revendications précédentes, caractérisée en ce que le dispositif (6) consiste en un ressort de pression (60).

7. Machine d'usinage de bois selon l'une ou plusieurs des revendications précédentes, caractérisée en ce que le dispositif (6) consiste en un ressort à gaz.

8. Machine d'usinage de bois selon l'une ou plusieurs des revendications précédentes, caractérisée en ce que le chariot roulant (4) possède deux doubles-rouleaux (40), le premier rouleau (42) de chaque double-rouleau (40) étant en contact avec la table d'équarrissage (2) et le deuxième rouleau (43) de chaque double-rouleau (40) étant en contact avec la poutre de guidage (3), des éléments de guidage (21, 22, 31, 32) pour ces rouleaux étant fixés, soit à la table d'équarrissage (2), soit à la poutre de guidage (3), les deux doubles-rouleaux (40) étant sur un axe qui n'est pas perpendiculaire à la direction de mouvement du chariot roulant (4, 4') et un rouleau tendeur (41) étant prévu, s'appuyant contre un des éléments de guidage (31, 32) afin d'ajuster la distance entre les doubles-rouleaux dans le sens perpendiculaire par rapport aux éléments de guidage.

9. Machine d'usinage de bois selon l'une ou plusieurs des revendications précédentes, caractérisée en ce qu'un élément tendeur (46) est prévu entre les doubles-rouleaux (40) et le rouleau tendeur (41) du chariot roulant (4, 4').

10. Machine d'usinage de bois selon l'une ou plusieurs des revendications précédentes, caractérisée en ce que le chariot roulant (4, 4') est déformable dans le plan des éléments de guidage (31, 32) de la poutre de guidage (3).

11. Machine d'usinage de bois selon l'une ou plusieurs des revendications précédentes, caractérisée en ce que les rouleaux (42, 43) possèdent des entailles prismatiques.

12. Machine d'usinage de bois selon l'une ou plusieurs des revendications précédentes, caractérisée en ce que la poutre de guidage (3) possède des butées ou des targettes de sécurité pour le chariot roulant (4, 4').

13. Machine d'usinage de bois selon l'une ou plusieurs des revendications précédentes, caractérisée en ce que le chariot roulant (104, 104') possède des rouleaux d'appui (48) et des rouleaux de guidage (70) dont les axes sont orientés principalement horizontalement.

14. Machine d'usinage de bois selon la revendication 13, caractérisée par un axe horizontal (49) commun aux rouleaux d'appui (48) et aux rouleaux de guidage (70).

15. Machine d'usinage de bois selon l'une ou plusieurs des revendications précédentes, caractérisée par un roulement excentré réglable du contre-rouleau (71), qui est opposé au rouleau de guidage (70).

16. Machine d'usinage de bois selon l'une ou plusieurs des revendications précédentes, caractérisée par un contre-rouleau (78) ayant une surface de roulement conique, pouvant coulisser en direction axiale contre la force d'un ressort afin de s'opposer au rouleau de guidage (70).
